# EUROPEAN PATENT SPECIFICATION

(11) **EP 2 965 233 B1**
(45) Date of publication and mention of the grant of the patent: **01.01.2020**
(21) Application number: 14716454.5
(22) Date of filing: 03.03.2014
(51) Int. Cl.: G06F 16/182

(54) **CROSS-FILE DIFFERENTIAL CONTENT SYNCHRONIZATION**
SYNCHRONISIERUNG VON DATEIÜBERGREIFENDEM, DIFFERENZIELLEM INHALT
SYNCHRONISATION DE CONTENU DIFFÉRENTIEL INTER-FICHIERS

(30) Priority: 04.03.2013 US 201313784551; 04.03.2013 US 201313784557
(43) Date of publication of application: 13.01.2016
(73) Proprietor: VMware, Inc., Palo Alto, CA 94304 (US)
(72) Inventor: CALKOWSKI, Grzegorz, Cambridge, MA 02142 (US); ZHUANG, Mingzhe, Palo Alto, CA 94304 (US)
(74) Representative: Appleyard Lees IP LLP
(86) International application number: PCT/US2014/020023
(87) International publication number: WO 2014/137938

(56) References cited:
- WO-A1-03/079213
- US-A1- 2010 318 759
- US-A1- 2012 185 448
- ATHICHA MUTHITACHAROEN ET AL: "A low-bandwidth network file system", PROCEEDINGS OF THE EIGHTEENTH ACM SYMPOSIUM ON OPERATING SYSTEMS PRINCIPLES , SOSP '01, 21 October 2001 (2001-10-21), - 24 October 2001 (2001-10-24), page 174, XP055120509, New York, New York, USA DOI: 10.1145/502051.502052 ISBN: 978-1-58-113389-9
- Dan Teodosiu ET AL: "Optimizing File Replication over Limited-Bandwidth Networks using Remote Differential Compression", Microsoft Corporation, 1 November 2006 (2006-11-01), XP055120508, Retrieved from the Internet: URL:http://research.microsoft.com/pubs/646 92/tr-2006-157.pdf [retrieved on 2014-05-27]
- YOUNG CHAN MOON ET AL: "Data Deduplication Using Dynamic Chunking Algorithm", 28 November 2012 (2012-11-28), COMPUTATIONAL COLLECTIVE INTELLIGENCE. TECHNOLOGIES AND APPLICATIONS, SPRINGER BERLIN HEIDELBERG, BERLIN, HEIDELBERG, PAGE(S) 59 - 68, XP047007700, ISBN: 978-3-642-34706-1 the whole document
- RANDAL C BURNS ET AL: "In-place reconstruction of delta compressed files", PRINCIPLES OF DISTRIBUTED COMPUTING, ACM, 2 PENN PLAZA, SUITE 701 NEW YORK NY 10121-0701 USA, 1 June 1998 (1998-06-01), pages 267-275, XP058228631, DOI: 10.1145/277697.277747 ISBN: 978-0-89791-977-7

## Description

### TECHNICAL FIELD

The present disclosure relates to methods, techniques, and systems for file synchronization.

### BACKGROUND

In a typical enterprise environment, users may employ a variety of client devices and client computing systems to use, share, and update their files which are stored remotely, for example, in a public or private computing "cloud." Here a computing cloud refers to computing resources, including software, which are delivered typically as a service over a network such as the Internet. The files are remotely stored on one or more server computing systems in, for example, a network file system or other network storage, and are accessible via a network, for example, a wide area network (WAN) such as the Internet, a private WAN, or a local area network (LAN). Client devices may include devices such as personal computers, tablets, laptop computers, smart phones, and other mobile devices, some of which have limited resource capacities.

Remote access to files, especially over a WAN, may be subject to bandwidth problems (such as too much data transferred over slow connections) which may lead to latency problems and ultimately an ineffective and frustrating user experience. These problems can be especially frustrating when there are small incremental changes to a file that still result in the entire file being transferred back and forth between one or more client devices and one or more server computing systems. For example, a typical enterprise user may make many modifications to the same spreadsheet file, presentation, or document in a single day, which the user wishes to share with another user for collaborative purposes. The modified file may be thus transferred back and forth several times in a single day.

Accordingly, the ability to provide efficient data transfer can make or break the user experience and can additionally translate into cost savings for limited resource client platforms, such as mobile users, that subscribe to usage based data plans.

In the background art, content-defined chunking (CDC) is described in Muthitacharoen et al, "A Low-Bandwidth Network File System", Proc. 18th Symp. Operating System Principles, Banff, CA, October, 2001. WO2003/079213A Crocker et al. describes a data replication system. *Burns et al* "In-Place Reconstruction of Delta Compressed Files" describes an algorithm for modifying delta compressed files to be reconstructed by network clients without scratch space. US 2010/0318759 Hamilton et al describes another example of delta file compression. US 2012/0185448 Mensch et al concerns differential compression based on file chunking, with the refinement that the file chunking algorithm is chosen according to the type of a particular data item (e.g. an audio file is chunked using one algorithm, whilst an image file is chunked using a different algorithm).

### SUMMARY

According to the present invention there is provided a method in a client computing system according to claim 1. Also there is provided a method for a server computing system as in claim 10. Further there is provided a computer-readable medium as in claim 15. Additional features of the invention will be apparent from the dependent claims and the discussion herein.

### BRIEF DESCRIPTION OF THE DRAWINGS

Figure 1 is a block diagram of an example environment for deploying a Cross-File Differential Content Synchronization System.
Figure 2 is a block diagram of example clients using the Cross-File Differential Content Synchronization System to synchronize files to an example server and each other.
Figure 3 is a block diagram illustrating an example single file patch produced by a Cross-File Differential Content Synchronization System for synchronizing an update to a file modified on a client.
Figure 4 is a block diagram illustrating an example cross-file patch produced by a Cross-File Differential Content Synchronization System for synchronizing an update to a file generated by another client.
Figure 5 is a block diagram illustrating of components of an example Cross-File Differential Content Synchronization client process and an example Cross-File Differential Content Synchronization server process.
Figure 6 is an example flow diagram of logic to generate a patch for use in a Cross-File Differential Content Synchronization System.
Figure 7 is an example flow diagram of logic to process a patch for use in a Cross-File Differential Content Synchronization System.
Figure 8 is an example block diagram of an example computing system that may be used to practice embodiments of a Cross-File Differential Content Synchronization System described herein.

### DETAILED DESCRIPTION

Embodiments described herein provide enhanced computer- and network-based methods, systems, and techniques for synchronizing content, such as a file, between one or more clients (*e.g.,* client computing systems) and one or more servers (*e.g.,* server computing systems). Example embodiments provide a Cross-File Differential Content Synchronization System (CDCSS) to synchronize files between remote systems in a nearly instantaneous manner without necessitating the transfer of the entire contents of a file. In particular, the CDCSS transfers only the differences in data content wherever possible to a recipient system by providing a patch mechanism that instructs the recipient to build the modified or new data content based upon content it already has access to. In addition, in one embodiment the CDCSS synchronization solution provides a client-based index (rather than a server-based index, or joint client and server indexes, which may be provided in other embodiments) for tracking patches and files, which reduces the amount of computational and I/O (input/output) overhead on the server and which does not require a negotiation between a client and a server to provide an update. This works well especially for "thick" clients such as desktop and laptop computers that have sufficient computing power to offload work from the server. Additionally, updates can be provided efficiently from the server to a remote client, such as when downloading updates to a mobile phone, by limiting the amount of duplicate data transferred by the server and ultimately stored at the remote client.

In example embodiments, the CDCSS comprises a client portion, termed the Cross-File Differential Content Synchronization (CDCS) client, and a server portion, termed the Cross-File Differential Content Synchronization (CDCS) server, which cooperate to transfer a "patch" between two computing systems when synchronization is desired. The patch is a representation of the file content that includes new data for the portion of the file content that has changed (or cannot otherwise be located in another file) and references to locations of data that has not changed and is locatable elsewhere. A patch thus provides a "differential synchronization" or "differential sync" - that is a synchronization (or "sync") of just the difference in the content, before and after the content has been updated or created. As used herein, a "file" refers to any type of file content regardless of how it is stored (*e.g.,* a portion of a file, an object, stored data, or the like), and can include content such as text, video, image, binary, or other data. Each patch contains a plurality of segments (*e.g.,* records, portions, etc.); each segment contains data content (directly) or a reference (*e.g.,* an indicator, pointer, description, etc.) to another file location where data content may be located.

A patch may be considered a "cross-file" patch because it may refer to data that is stored in one or more other files. Consider, for example, a letter produced using a letterhead template of a company. The company logo may be stored and locatable in one file, the address of the letter's addressee in a contact directory, and the contents of the letter yet in a third file. An example patch produced by the CDCSS may contain the actual contents of the letter, a reference to the area in the second file that contains the company logo (including specific location information) and a reference to a third file that contents the addressee information. By using references to locations within the second and third files when they already exist on the recipient computing system, the patch mechanism avoids sending duplicate data that is already present on the recipient computing system.

When a file is newly created or modified, for example, by a client device acting as a "producer" of information (*e.g.,* a producer client device), the client device computes a patch and sends the patch to a destination or recipient server. The server processes the patch in conjunction with already stored data to create the new or modified file. Later, when another client device (*e.g.,* a "consumer" of data) is updated with the new or modified file (*e.g.,* when a file is synchronized, requested, etc.), instead of sending the entire file, the server can just send the patch that was already computed by the producer client device to the client device acting as the consumer (*e.g.,* a consumer client device). The consumer client device is responsible for creating its own new or modified file by processing the patch using files it already has and/or by downloading any missing information. Thus, a new or modified file may be shared with others by computing a patch (using the differential sync mechanism) and uploading it to a server (*e.g.,* in the cloud), which constitutes/reconstitutes the file and caches the patch so that it can be propagated (*e.g.,* by downloading) to other computing systems.

In some embodiments, the patch is cached for some period of time (*e.g.,* set, preset, configured, etc.) or according to some algorithm (*e.g.,* least recently used, least frequently used, FIFO, etc.) and then flushed from the cache when the time period expires or the algorithm so dictates. Upon deletion of the patch from the cache, a consumer client receiving the update may receive the entire file contents instead of the patch. In addition, in some embodiments, for example, when the patch is no longer cached or available, the server may re-compute the patch as needed. In either case, when the consumer client receives the patch for processing it need not know whether it was the original patch created by the producer client device or a new patch created by the server. In some embodiments, where storage is practically speaking limitless, patches may be cached without deletion or expiration.

In some cases, a client device may further publish information created by others (*e.g.,* a client device acting in publisher capacity) by efficiently uploading this information to the server and disseminating it through patches. To the extent the information to be published depends upon other information already existent on the publisher client device, a patch may be computable and disseminated. To the extent it does not so depend, the entire information to be published may need to be sent to the server.

When deployed as described, the CDCSS optimizes the information transferred by reducing the amount of duplicated data transferred among systems. This is particularly useful in an environment where data transfer may be slow or costly and provides for near instantaneous (*e.g.,* near real-time) synchronization of incrementally modified content. The CDCSS techniques take advantage of the high probability of similar data residing on a particular computing system and accordingly manage smaller indexes on a distributed basis (each client) rather than managing a large global de-duplication scheme. In addition, the CDCSS may be retrofit into an architecture designed without de-duplication in mind because the components are separate from the file system and other system aspects.

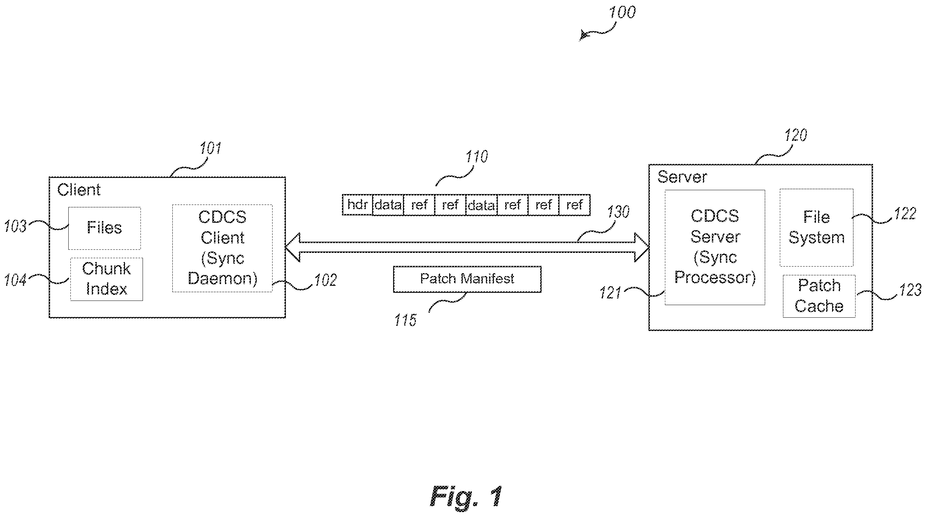

Figure 1 is a block diagram of an example environment for deploying a Cross-File Differential Content Synchronization System. Environment 100 includes at least one client computing system (client) 101 and at least one server computing system (server) 120. The client 101 communicates with the server 120 to synchronize files. As mentioned above, such communication and synchronization may take place over communications mechanism 130, which may be a network such as a LAN, WAN, or over some communications gateway. The server 120 may be a server in the "cloud" and may be deployed as a software as a service (SAAS) application on some host computing system unknown to the client 101.

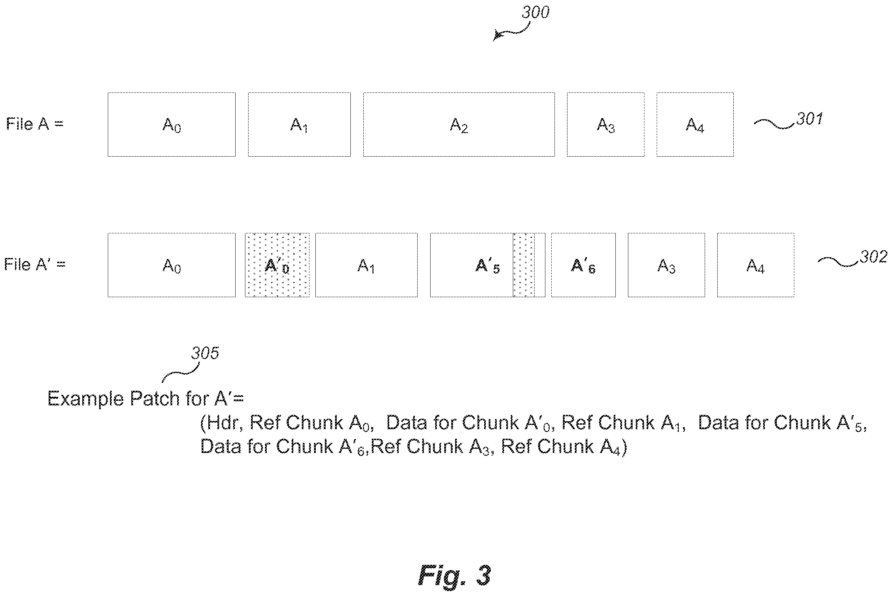

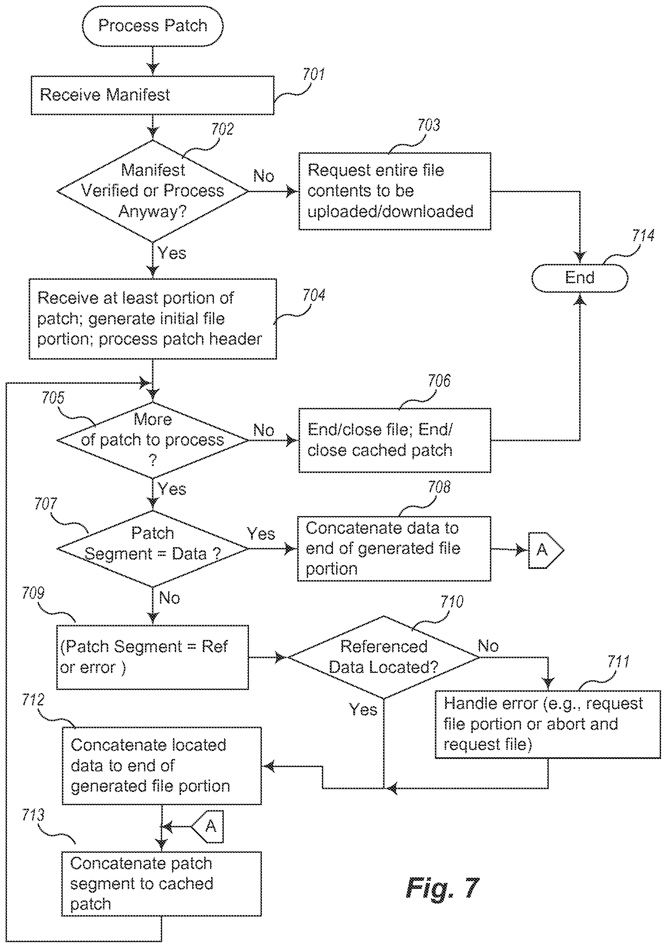

Client 101, through the use of the CDCS client 102, sends one or more patches, such as patch 110, to server 120 over the communications mechanism 130. In order to synchronize a new or modified file that the client 101 has generated (or stored as a file in file storage 103), the client 101 computes a patch 110 that describes the difference in the file content, before and after modification, as described in detail further below with reference to Figures 3, 4, and 6. Server 120, through use of the CDCS server 121, receives one or more patches, such as patch 110, from client 101 over the communications mechanism 130. As will be described further with respect to Figure 7, the patch 110 may be received in segments (*e.g.,* records, portions, etc.) and processed in a pipeline (*e.g.,* sequentially or via stream processing). Each patch is processed to generate a file (or file version) which is stored in file system 122. Additionally, a copy of the patch 110 is cached in patch cache 123 for further distribution to synchronize/update other clients (not shown). In addition, when the server 120 further distributes a patch to synchronize/update a client (for example, to send another patch 110 to update client 101), the server 120 computes and sends patch manifest 115 which contains a listing of all files that are referred to in the patch 110. This way, the recipient computing system can first verify that a referred-to file indeed exists, and if it does not, either choose to request the entire file in total, or request the data content from the referred-to file instead of just processing the reference.

The client 101 computes patch 110 based upon a local chunk index 104, which contains an index to portions of files that the client 101 knows about and believes exist on server 120. In one embodiment, each file of the CDCSS is divided into one or more chunks of data (data content) from bytes 1 to N in a linear fashion. Non-overlapping chunks of data of variable sizes are determined based upon their content using a technique referred to as "content-defined chunking" (CDC). Different algorithms, such as "Rabin fingerprinting," may be incorporated into the CDCSS for dividing up the file into chunks and for representing the file content. Once the file has been divided into chunks, for each chunk, a hash is computed and indexed in the local chunk index 104. The hash for each chunk is associated with the location information for the chunk, for example, a file identifier and offset, so that, based upon the indexed hash, the location information for the chunk can be identified. In some embodiments the hash is a strong cryptographic hash (*e.g.,* SHA-256) of the content of the chunk, although in other embodiments, other hashes and/or other identifiers may be incorporated.

When file content is modified or created, the CDCSS divides the file into chunks (*e.g.,* using the Rabin fingerprinting algorithm) and determines whether each chunk is already present in the local chunk index 104 or not by looking up the hash of the chunk in the chunk index 104. Any data structure for representing the local chunk index 104 may be used, including, for example, a list, file, database, array, table, etc. In the case where the chunk is already present in the local chunk index 104, the CDCSS generates reference information in the patch 110 that represents that chunk of the file. In the case where the chunk is not already present, the CDCSS stores the data content information for that chunk in the patch 110. In this manner, the CDCSS builds up the patch 110 sequentially by examining the file, chunk by chunk. As a result, the patch 110 can be forwarded (e.g., sent, transferred, communicated, etc.) to a recipient in parts as it is created (or, in some embodiments, after the whole patch is computed) to be processed sequentially, for example, in a pipeline, as it is received. Of note, the format of the patch is independent of the chunking algorithms used and how the patch is created. Thus, the patch can be processed when received without knowledge of the details of how it was created - just that it contents content and references to content and how to process the patch itself.

In one embodiment, a "Rabin fingerprinting" algorithm is employed to determine the chunk boundaries of a file and to thus select chunks for the file. The process of fingerprinting the content is also referred to as "chunking." Rabin Fingerprinting is described in detail in Rabin, Michael O., Fingerprinting by Random Polynomials, Technical Report TR-15-81, Center for Research in Computing Technology, Harvard Univ., 1981. Use of Rabin fingerprinting for content-defined chunking (CDC) is described in Muthitacharoen et al., A Low-Bandwidth Network File System, Proc. 18th Symp. Operating System Principles, Banff, CA, October, 2001. In summary, a Rabin fingerprint is defined as the reminder from the division of the polynomial representation of a sequence of bytes divided by a preselected irreducible polynomial. The fingerprint offers a strong probability that two different sequences of bytes will have different fingerprints. The fingerprint of a sliding window of bytes of the file (between 40 and 64 bytes) is calculated, much like a rolling checksum. When the least significant 13 bits of the window's fingerprint equal a preselected "magic" value, the end offset of the window is considered to be a chunk boundary. Aminimum and maximum size of the chunks can be configured and tuned as desired. In one embodiment, they are set to 4 KB and 16KB respectively. The rolling checksum like calculation present in the Rabin fingerprint algorithm and similar algorithms provide a balance of reliability and speed.

Of note, other algorithms may be incorporated into an example CDCSS. For example, any hashing algorithm with a reasonably uniform distribution could be used to fingerprint/chunk the file data. For example, hashes from a secure hash algorithm family such as SHA-1 or MD5 could be used, but they are generally more expensive to calculate.

Once the patch is sent, it can be processed "on the fly" as it is received, for example, by the recipient (server or a consumer client). As described further with respect to Figure 7, the server or other recipient can process the patch in a linear fashion to generate a file from its contents without needing any chunk index, including without needing its own chunk index. The patch format alone describes a recipe for generating the file from its contents. The new or modified file is constructed by appending the data content that is embedded in the patch and by copying chunks of data content from other files that are referred to in the patch. As a result, the CDCS techniques may be used with or retrofit into computing systems that were not set up for differential sync or to use de-duplication processes. In particular, as long as the client runs the CDCS client (*e.g.,* the sync daemon process) and the server runs the CDCS server (*e.g.,* the sync processor), the client and server can communicate to provide differential sync without further modifications.

Because of the patch format and the techniques for generating and forwarding the chunk index, the CDCSS is able to perform a differential sync of file content based solely upon client-side knowledge of what is contained in the index without any negotiation with the recipient server to see if content is available on the server. In particular, in environments where the server stores every file immutably (*e.g.,* all files, versions, etc. are stored or accessible forever), the producer client can assume that if a file is referred to by its chunk index, then the file exists on the server (unless there is an error in the chunk index, which can be fixed by notification of the client). Further, files that may have been deleted on the client may still be referred to by the chunk index of a client for some period of time or indefinitely dependent upon the design and implementation of the chunk index. Since these files are immutable on the server (*e.g.,* not ever deleted in a practical sense, although they may be archived), a patch can be created that takes advantage of the presence of the file still on the server, even though it no longer exists on the client, to reduce the amount of data forwarded by the client in a sync operation. This aspect may be particularly useful in a "Save As New File & Delete Original File" scenario.

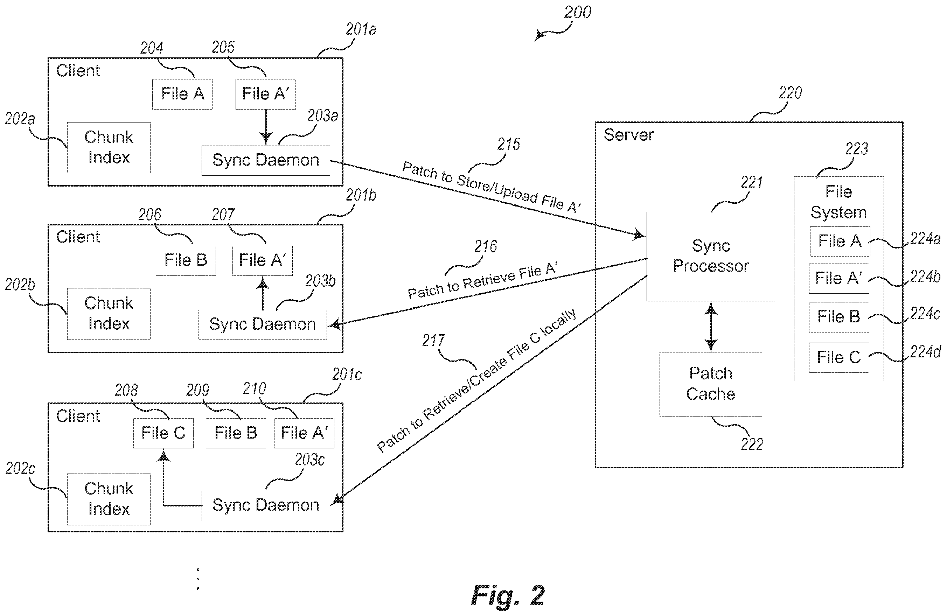

Figure 2 is a block diagram of example clients using the Cross-File Differential Content Synchronization system to synchronize files to an example server and each other. According to example 200, a plurality of client computing systems 201a, 201b, and 201c are communicatively connected to server computing system 220. Although not shown, clients 201a-201c may also be connected to a variety of other servers and may synchronize files to multiple of them. Each client 201a-201c has its own chunk index 202a, 202b, and 202c, respectively, and its own sync daemon (CDCS client) 203a, 203b, and 203c, respectively. The chunk indexes 202a-202c and sync daemons 203a-203c operate as described with respect to Figure 1. The sync daemons 203a-203c are responsible for generating and forwarding patches to the server 220 when a client is acting in its producer role (modifying or creating a file) and are responsible for receiving and processing patches when the client is acting in its consumer role (receiving an update to a file or a new file).

A server file system 223 for storing files is associated with the server 220, and each client 201a-201c is responsible for synchronizing its files with server 220 so that they can be kept up to date and shared with other clients. In some embodiments the file system 223 is distributed; however the synchronization methods can still be employed to keep the files on all systems up to date. The server 220 also executes a sync processor (CDCS server) 221 which is responsible for processing received patches to create files, such as files 224a-224d, stored in the file system 223 associated with the server.

In the example illustrated, client 201a contains a file "A" 204, which it has modified - shown as File "A'" 205. As described in Figure 3, File A' 205 has content based upon File A 204 with some modifications. Client 201A generates, through the use of sync daemon 203a, a patch 215 which it uploads to the server 220. Server 220, through its sync processor 221, processes patch 215 to generate a new file (or version), File A' 224b, which it stores in the file system 223. The sync processor 221 also builds up and/or stores a copy of patch 214 in the patch cache 222.

In example 200, client 201b uses its sync daemon 203b to download a copy of the patch used to generate File A' (here patch instance 216). Patch 216 is processed by the sync daemon 203b to generate its own copy of File A' 207 based upon references to its own copy of File A (not shown). Here client 201b is acting as a consumer client. In another instance client 201b sends a patch (not shown) to generate or update File B 206 on the server 220 also for sharing and synchronization. In this instance client 201b is acting as a producer client.

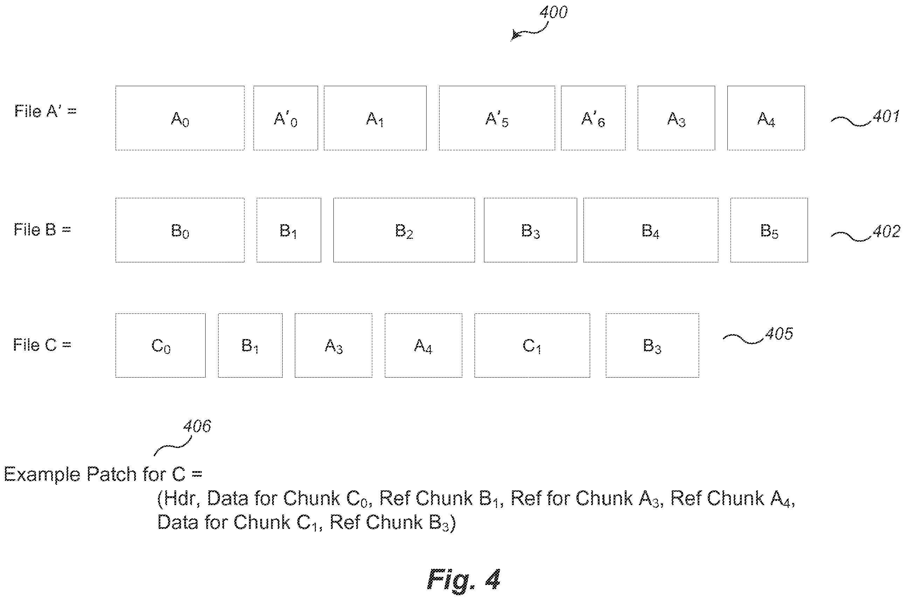

Also, in example 200, client 201c, who has previously downloaded/updated a copy of File B 209 from server File B 224c storage and File A' 210 from server File B 224b storage (either through a full file content download or by previously receiving and processing one or more patches), receives a patch 217 to generate a new file, File C 208. The patch for File C 208 contains some content that can be found in File B 209 and some content that is found in File A' 210 as described with reference to Figure 4.

Figure 3 is a block diagram illustrating an example single file patch produced by a Cross-File Differential Content Synchronization system for synchronizing an update to a file modified on a client. Example 300 illustrates how a patch is generated in client 201a in Figure 2 to upload the changes made to File A 204 to be stored on server 220, for example, as File A' 224b, a new version. In this example, File A' denotes a modified version of File A. The chunks 301 represent the chunks of File A that result from applying a chunking algorithm that divides the file into segments of data content. File A is shown divided into five separate chunks: A₀ to A₅. File A' represented by chunks 302 is shown containing seven different chunks, four of which are identical to those contained in File A: chunks A₀, A₁, A₃, and A₄. Three of the chunks 302 are new or modified, either because they contain all new data (as shown by the grey stipple), such as chunk A'₀, or because they contain data from a chunk of File A that has been modified, such as chunk A'₅ which contains some modifications to chunk A₂ from File A. Specifically, chunk A₂ has been split into two new chunks in File A': a chunk A'₅ which contains modifications and a chunk A'₆ which contains data from File A.

Patch 305 is an example patch that is generated by client 201a to perform a differential sync to create the modifications to File A, here named as File A'. (Note that the modifications can be thought of as a new file, a new file version, or modifications to File A, depending upon the implementation.) For the purposes of Figure 3, File A' is treated as a more recent version of File A. In an example patch format according to CDCSS techniques, patch 305 consists of a header, followed by a reference to chunk A₀ in File A, followed by data content for chunk A'₀, followed by a reference to chunk A₁ in File A, followed by data content for chunk A'₅, followed by data content for chunk A'₆, followed by a reference to chunk A₃ in File A, followed by a reference to chunk A₄ in File A.

In general, according to one embodiment, a patch consists of one or more segments (*e.g.,* records, items, etc.) following a header, which imparts certain information about the patch such as a patch identifier, a format indicator, an indicator of the length of the file that should result from applying the patch, and an indicator of the media type of the resulting file. Each segment of the patch is either a data record, which identifies that size and type of the data content contained therein or a reference record, which contains a tuple that indicates a unique file identifier (*e.g.,* File ID or UUID) of the file that contains the data, version identifier, offset (*e.g.,* a byte offset to the chunk of data in the referred to file), and a hash of the chunk (*e.g.,* a SHA-256 hash). A recipient can use the hash to verify the retrieved data by computing the hash of retrieved data based upon the File ID and offset and comparing it to the stored hash value. If they are not the same, the recipient can detect an error in the patch or in the stored file. In this case the recipient (*e.g.,* the server) can notify the client that uploaded the patch that it is incorrect. In some embodiments, patch segments that contain a reference record may actually stored a separate record that defines the reference (using the File ID/UUID and version) and a separate record that indicates the location of a chunk within the reference (offset, length, hash). This allows easy creation of a manifest that provides a list of references contained within the patch.

As notable from Figure 3, File A' causes generation of a "single file" patch 305. That is, the patch does not have references that refer to more than one file even though the patch format is capable of handling multiple files - hence the term "cross-file" patch. In such instances wherein only one file is referenced, simplifications for representation of the patch may be employed, although not necessary. In addition, a manifest later created to accompany or precede sending of the patch to other clients, may be simplified since it only refers to one file.

In other scenarios, certain other optimizations or enhancements may be incorporated into patches and/or into patch manifests. For example, a patch may be self-referential: that is, portions of the patch may refer to other portions of the patch; a patch may be compressed or contain data content that is compressed; or a patch may include insert/delete directives or other types of operators in addition to or instead of the format identified above (data and reference records). Other optimizations may be incorporated. For example, files may be segmented into chunks based upon their specific formats (*e.g.,* format aware chunking). As an example, zip files naturally divide into sub-file boundaries, which can be further divided. Similarly, specific format chunking may be developed for formats such as MP3 to split metadata from the audio data. Also, in some embodiments patches for incremental /differential sync purposes may be only generated for files above a certain size, potentially configurable.

Figure 4 is a block diagram illustrating an example cross-file patch produced by a Cross-File Differential Content Synchronization system for synchronizing an update to a file generated by another client. Example 400 illustrates how a patch is processed in client 201c in Figure 2 to download a patch that can be used to generate File C, from File B and File A'. In this example, File A' denotes a the most recent version of File A. The chunks 401 represent the chunks of File A' described with reference to Figure 3. File A' is shown divided into seven separate chunks. The chunks 402 represent the chunks of File B (File B 209 in Figure 2) previously downloaded to client 201c. The chunks 405 represent the data chunks of File C (File C 208 in Figure 2) formed from new data content chunks C₀ and C₁ and from data within Files A' and File B (chunks A₃ and A₄ and chunks B₁ and B₃, respectively).

In an example patch format according to CDCSS techniques, patch 406 consists of a header, followed by data content for chunk C₀, followed by a reference to chunk B₁ in File B, followed by a reference to chunk A₃ in File A', followed by a reference to chunk A₄ in File A', followed by data content for chunk C₁, followed by a reference to chunk B₃ in File B.

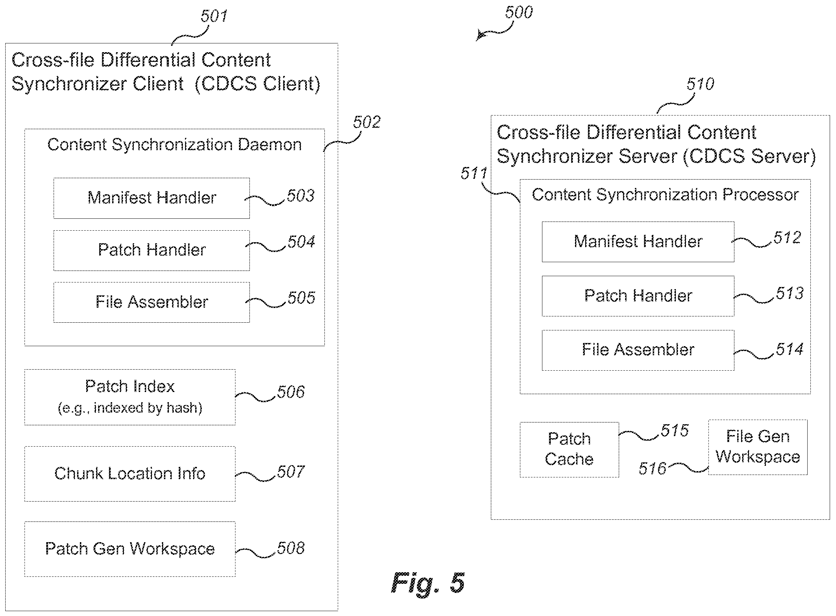

Figure 5 is a block diagram illustrating of components of an example Cross-File Differential Content Synchronization client process and an example Cross-File Differential Content Synchronization server process. In one embodiment, the Cross-File Differential Content Synchronization System comprises one or more functional components/modules that work together to synchronize content differences in an optimized manner. These components may be implemented in software or hardware or a combination of both. According to illustration 500, a Cross-File Differential Content Synchronization System comprises a CDCS Client 501 and a CDCS Server 510. The CDCS Client 501 comprises a Content Synchronization Daemon process 502, a patch index 506, a chunk location information 507, and a patch generation workspace. The CDCS Server 510 comprises a Content Synchronization Processor 511, a patch cache 515, and a file generation workspace 516.

As explained with reference to Figure 1, the content synchronization daemon (process) 502 executes on the client and is responsible for generating patches to upload new and modified files to a server and for processing patches to download new and modified files. In one embodiment, the process 502 monitors a known folder on the client system to determine when files have been changed. Monitoring also can be accomplished by subscribing to certain operating system event handling. When a change is made to a file (according to the system events subscribed to), the file is read, indexed, and the process 502 determines whether and when to synchronize the change. In an alternative embodiment, the process 502 may execute as part of the I/O drivers or hierarchy. Additionally, the process 502 may scan a folder hierarchy to determine when files have been changed. This may happen in conjunction with subscribing to events, or executing as part of a driver hierarchy, or, in other embodiments, may provide a sole mechanism for monitoring. Other mechanisms may similarly be incorporated for daemon 502 to determine when to generate or process patches.

Process 502 further comprises or is associated with a manifest handler 503, a patch handler 504, and a file assembler 505. The manifest handler processes a manifest when, for example, it is received from a server, to make sure the referenced (referred-to) files that are referenced by an upcoming or accompanying patch are truly available. If they are not available or are otherwise in error, the client 501 has the option of requesting the full file content for the file being downloaded or of accepting the patch anyway and requesting specific content (even specified by location and number of bytes) from, for example the server, to fill in the missing parts thereby "repairing" the broken references. In such case, a server might be programmed to handle errors and repair a stored patch (*e.g.,* a patch cached in patch cache 515. In one embodiment, the patch is not downloaded until and unless a recipient client verifies that the patch can be applied by processing the manifest.

The patch handler 504 is responsible for processing a received patch. Processing patches (whether by a recipient server or by a recipient client) is described further with reference to Figure 7. Patches can be processed in a sequential pipeline manner, a segment at a time, and the resultant file built by file assembler 505.

As described with reference to Figure 1, the patch index 506 (local chunk index) indexes content chunks of all files on the client using, typically, a cryptographic hash. These indexed hash values are independent of any hash or other algorithm used to help segment the files into chunks and can be derived using separate algorithms. Each index key (*e.g.,* a hash value) resolves to location information for a chunk of content. In some embodiments, the location information is stored in a separate repository 507. In other embodiments it is stored as part of the patch index 506 directly. The patch index 506 is used to generate patches for clients acting as producers of new or modified file data in order to forward the patches to synchronize files. As described elsewhere, when new or modified data is encountered, hashes of its chunks are looked up as index keys in the patch index 506 and, if they exist, a reference to existing data is placed in the patch being generated; if they do not exist, the data content itself is stored in the patch being generated. In some embodiments, a patch generation workspace 508 is included in the CDCS client 501 to aid in the generation of patches.

Similarly, the content synchronization processor 511 of the CDCS server 510 includes a manifest handler 512, a patch handler 513, and a file assembler 514. The manifest handler 512 is responsible for generating a manifest for a received patch (*e.g.,* before a patch is propagated to another client). The patch handler 513 receives patches from clients who are syncing files and forwards (*e.g.,* sends, conveys, communicates, etc.) cached patches stored in patch cache 515 to recipient other clients. The file assembler 514 is used to assemble the new or modified file as the patch is being processed. The file is assembled in the file gen workspace 516 by copying data directly from the patch to the new (or new version of a) file or by retrieving data from a file referenced by the patch according to the stored location information, size, etc.

In one embodiment, the content synchronization processor 511 of the CDCS server 510 is implemented using REST application programming interfaces (API) and thus available as Software As A Service (SAAS) or as other web available resources. A web server acting as the processor 511 fields requests for files and returns patches wherever possible.

Although the techniques of CDCSS are generally applicable to any type of file, the phrase "file" is used generally to imply any type of object from which differential content can be determined. Also, although the examples described herein often refer to a server file system, the techniques described herein can also be used locally, remotely with a network file system, or in other architectures to promote de-duplication. For example, the techniques described herein may be used with files stored in any type of file system, objects stored in any type of data store, or any linear byte stream of data. In addition, the concepts and techniques described are applicable to other architectures, patch protocols, devices, etc. Essentially, the concepts and techniques described are applicable to any file or object synchronization.

Also, although certain terms are used primarily herein, other terms could be used interchangeably to yield equivalent embodiments and examples. In addition, terms may have alternate spellings which may or may not be explicitly mentioned, and all such variations of terms are intended to be included.

Example embodiments described herein provide applications, tools, data structures and other support to implement a Cross-File Different Content Synchronization System to be used for synchronizing content of a file. Other embodiments of the described techniques may be used for other purposes including de-duplication generally. In the following description, numerous specific details are set forth, such as data formats and code sequences, etc., in order to provide a thorough understanding of the described techniques. The embodiments described also can be practiced without some of the specific details described herein, or with other specific details, such as changes with respect to the ordering of the logic, different logic, etc. Thus, the scope of the techniques and/or functions described are not limited by the particular order, selection, or decomposition of aspects described with reference to any particular routine, module, component, and the like

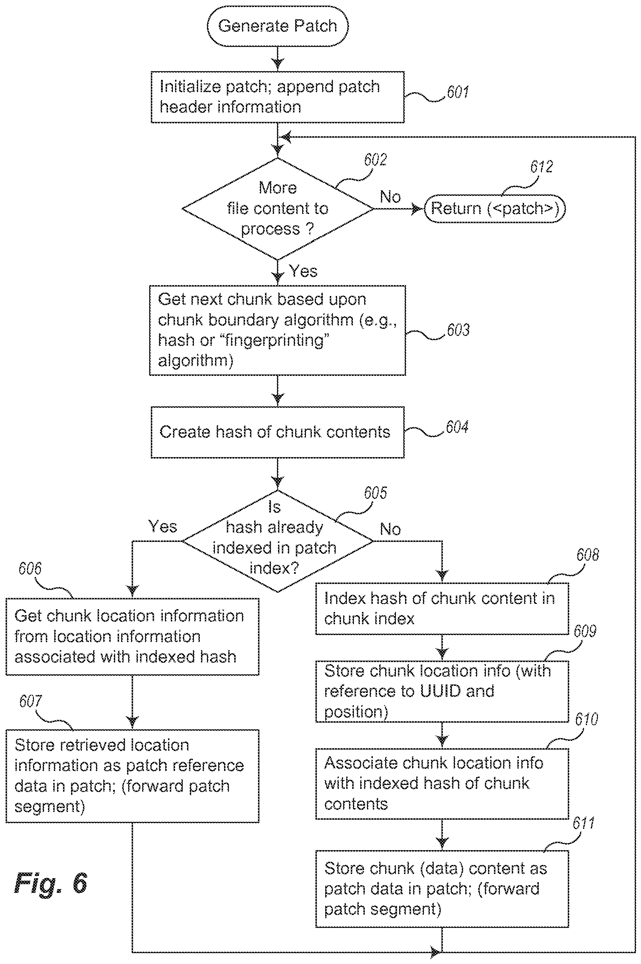

Figure 6 is an example flow diagram of logic to generate a patch for use in a Cross-File Differential Content Synchronization System. The logic of Figure 6 may be used by a CDCS Client, *e.g*., sync daemon 102 in Figure 1, to generate a patch for a new or modified file. In block 601, a patch data structure is initialized and header information is added that identifies the patch. Optionally, additional information such as a version of the patch format, the length of the resulting file, and the media type of the file being generated can also be included in the header. In blocks 602-611, the logic executes a loop to process each chunk of data content of the new or modified file. In particular, in block 602, the logic determines whether there are more chunks to process and if so continues in block 603, else terminates in block 612. In instances where the patch is returned and forwarded to, for example, a server, at the end of processing the entire patch, then the patch is returned in block 612. Otherwise, the logic just returns as the patch has already been forwarded.

In block 603, the logic obtains the next chunk of data content of the file based upon whatever chunking algorithm is used. As described earlier, in one embodiment a Rabin fingerprinting algorithm, which implements content-defined chunking (CDC), is used to break up a file's data content into segments that can be compared for determining what content has changed. In other embodiments, other algorithms may be used, including, for example, MD5 or SHA-1 hashes. The algorithms chosen can be implemented in a system that supports a client-side only cache, wherein the server need not have a copy of the cache nor be aware of the chunking algorithm in order to process a patch.

In block 604, a separate representation value, for example, a strong cryptographic hash value such as SHA-256, is computed to index the chunk previously determined according to the chunk boundary algorithm. In block 605 the logic uses this value as a "key" into a patch index to determine whether the data content represented by the value (hash) is already indexed. If so, then the logic continues in block 606 to obtain location information for the data content to use in a reference in the patch being generated, otherwise continues in block 608 to formulate a new indexed record and to store the data content directly in the patch being generated.

In particular, if the (hash) key indicates that the data content is already present in the patch index, then in block 606 the logic obtains chunk location information from the location information associated with the indexed (hash) value. Then, in block 607, this retrieved location information is added as a patch reference data in the patch being generated. In some embodiments, a manifest for the patch being generated is also generated while the patch is being generated. In such a case, along with block 607, the logic can generate a record in the manifest that corresponds to the newly created patch reference in the patch. Further, in embodiments that support sequential, or streamline processing, the new segment of the patch being generated is forwarded (*e.g.,* sent, communicated, etc.) to the server (directly or indirectly). The logic then returns to the beginning of the loop in block 602.

If on the other hand the (hash) key indicates that the data content is not found in the patch index, then in block 608, the (hash) key for the new or modified content chunk is indexed and in block 609 the location information associated with the new or modified content chunk is stored. For example, a UUID for the file, a position within the file where the chunk can be found, and a length of the chunk may be stored. In block 610, this stored location information is then associated with the newly indexed (hash) key. In one embodiment, blocks 609 and 610 are performed in tandem as the location data is stored directly in the patch index. In other embodiments, the location information may be stored separately, for example, in a separate data repository which is cross referenced from the patch index.

In block 611, the new or modified content is stored as patch data in a segment of the patch being generated. Then, in embodiments that support sequential, or streamline processing, the new segment of the patch being generated is forwarded to the server (directly or indirectly). The logic then returns to the beginning of the loop in block 602.

Figure 7 is an example flow diagram of logic to process a patch for use in a Cross-File Differential Content Synchronization System. The logic of Figure 7 may be used by a CDCS Client, *e.g.,* sync daemon 102 in Figure 1 or a CDCS Server, *e.g.,* a sync processor 121, to process a received patch for a new or modified file. Although slight differences may apply to processing by the server or by a consumer client, the basic logic described here is applicable to both.

In block 701, assuming a manifest is available, it is received. In block 702, the logic reviews the list of files contained in the manifest records to determine that it has access to all of the files referred to therein. If so, or if the logic determines it will process the patch anyway, then the logic continues in block 704, otherwise continues in block 703. In block 703, the logic determines and requests that the entire file contents needs to be uploaded/downloaded, and then the logic ends 714.

In block 704, the logic receives at least a portion of the patch, generates an initial portion of the file to be created, and processes the patch header.

Blocks 705 through 713 implement a loop for processing each segment of the patch. In particular, in block 705, the logic determines whether there are more segments in the patch to process. If not, then the logic continues in block 706, otherwise continues in block 707.

In block 706, the logic ends or otherwise closes the file being created and closes or otherwise ends the patch being cached (in the case the logic is executed by a server). In some server embodiments, a manifest is created while processing the patch (for future consumers) and, if so, the manifest is closed. The logic then proceeds to block 714 to end processing.

In block 707, the logic determines whether the next patch segment is a data segment (contains data content) and if so, continues in block 708, otherwise continues in block 709. In block 708, the logic reads the data content from the patch and appends it to the end of the file portion generated thus far, and continues in block 713.

In block 709, the logic determines whether (presumes that) the next patch segment is a reference (or an error) and proceeds to block 710. In block 710, the logic determines whether data in the referenced file has been located. If so, the logic continues in block 712, otherwise continues in block 711 to handle the error. Handling the error may include, for example, requesting data for a specific portion of the file, aborting the patch processing, or even requesting the whole file. The logic then continues in block 712.

In some embodiments, in block 710 the logic retrieves the referred to data, computes its own hash value for the retrieved data, and then compares the computed hash to a hash value stored with the patch record that provided a reference to the data. In this manner, the logic is able to verify that the data found matches that specified by the patch. If not, the error is handled according to block 711.

In block 712, the logic proceeds to concatenate (append) the located/retrieved data to the end of the file portion generated thus far, and continues in block 713.

In block 713, the logic concatenates (appends) the processed patch segment to the patch being cached and returns to the beginning of the patch segment processing loop in block 705. In embodiments in which a manifest is created while processing the patch (*e.g.,* for future consumers), then a record is added to the manifest to correspond to the reference contained in the patch segment examined in block 709. The logic then returns to the beginning of the loop to process the next patch segment in block 705.

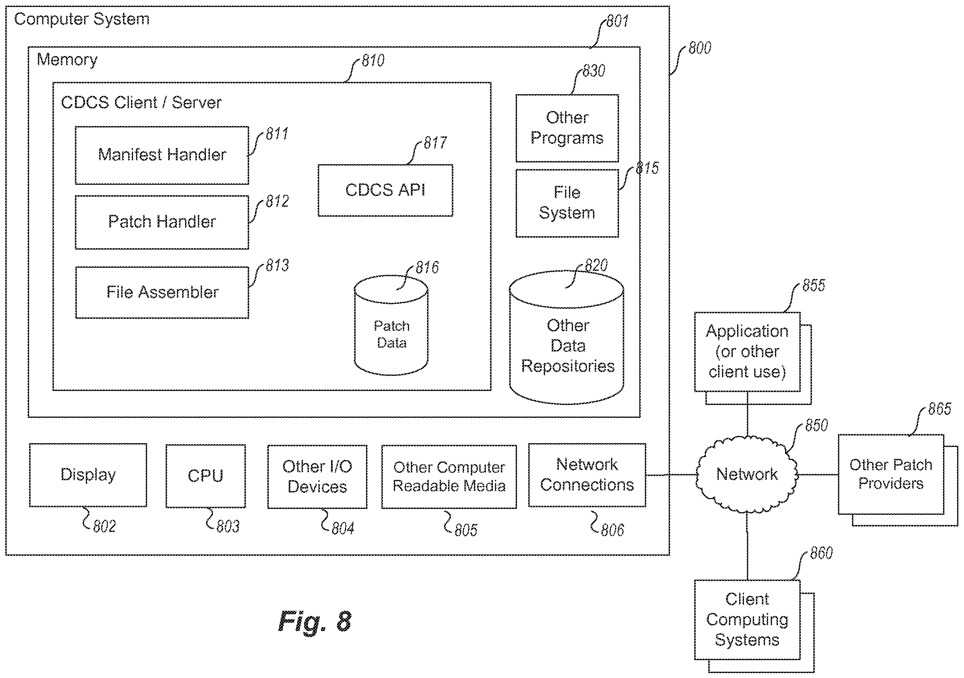

Figure 8 is an example block diagram of an example computing system that may be used to practice embodiments of a Cross-File Differential Content Synchronization System described herein. Note that a one or more virtual or physical general purpose computing systems suitably instructed or a special purpose computing system may be used to implement a CDCSS. Further, the CDCSS may be implemented in software, hardware, firmware, or in some combination to achieve the capabilities described herein.

The computing system 800 may comprise one or more server and/or client computing systems and may span distributed locations. In addition, each block shown may represent one or more such blocks as appropriate to a specific embodiment or may be combined with other blocks. Moreover, the various blocks of the CDCSS 810 may physically reside on one or more machines, which use standard (e.g., TCP/IP) or proprietary interprocess communication mechanisms to communicate with each other.

In the embodiment shown, computer system 800, for use as a client or as a server, comprises a computer memory ("memory") 801, a display 802, one or more Central Processing Units ("CPU") 803, Input/Output devices 804 (*e.g.,* keyboard, mouse, CRT or LCD display, etc.), other computer-readable media 805, and one or more network connections 806. The CDCSS (client or server) 810 is shown residing in memory 801. In other embodiments, some portion of the contents, some of, or all of the components of the CDCSS 810 may be stored on and/or transmitted over the other computer-readable media 805. The components of the CDCSS 810 preferably execute on one or more CPUs 803 and manage the generation and processing of patches, as described herein. Other code or programs 830 and potentially other data repositories, such as data repository 806, also reside in the memory 801, and preferably execute on one or more CPUs 803. Of note, one or more of the components in Figure 8 may not be present in any specific implementation. For example, some embodiments embedded in other software may not provide means for user input or display.

In a typical embodiment, the CDCSS (client or server) 810 includes one or more manifest handlers 811, one or more patch handlers 812, and one or more file assemblers 813. In at least some embodiments, a patch is provided external to the CDCSS client or server and is available, potentially, over one or more networks 850. Other and /or different modules may be implemented. In addition, the CDCSS may interact via a network 850 with application or client code 855 that uses patches computed by a CDCS client 810, one or more client computing systems 860, and/or one or more third-party patch providers 865. Also, of note, for computing systems that host CDCS client code, the patch data 816 may include a patch index which may be made accessible to other systems over network 850.

In an example embodiment, components/modules of the CDCSS 810 are implemented using standard programming techniques. For example, they may be implemented as a "native" executables running on the CPU 803, along with one or more static or dynamic libraries. In other embodiments, the components of the CDCS client or CDCS server 810 may be implemented as instructions processed by a virtual machine. A range of programming languages known in the art may be employed for implementing such example embodiments, including representative implementations of various programming language paradigms, including but not limited to, object-oriented (*e.g.,* Java, C++, C#, Visual Basic.NET, Smalltalk, and the like), functional (*e.g.,* ML, Lisp, Scheme, and the like), procedural (*e.g.,* C, Pascal, Ada, Modula, and the like), scripting (*e.g.,* Perl, Ruby, Python, JavaScript, VBScript, and the like), and declarative (*e.g.,* SQL, Prolog, and the like).

The embodiments described above may also use well-known or proprietary, synchronous or asynchronous client-server computing techniques. Also, the various components may be implemented using more monolithic programming techniques, for example, as an executable running on a single CPU computer system, or alternatively decomposed using a variety of structuring techniques known in the art, including but not limited to, multiprogramming, multithreading, client-server, or peer-to-peer, running on one or more computer systems each having one or more CPUs. Some embodiments may execute concurrently and asynchronously and communicate using message passing techniques. Equivalent synchronous embodiments are also supported.

In addition, programming interfaces to the data stored as part of the CDCSS client or CDCSS server 810 (*e.g.,* in the data repository 816) can be available by standard mechanisms such as through C, C++, C#, and Java APIs; libraries for accessing files, databases, or other data repositories; through scripting languages such as XML; or through Web servers, FTP servers, or other types of servers providing access to stored data. The patch data 816, including a patch index when computing system 800 is a client, may be implemented as one or more database systems, file systems, or any other technique for storing such information, or any combination of the above, including implementations using distributed computing techniques.

Also the example CDCSS 810 may be implemented in a distributed environment comprising multiple, even heterogeneous, computer systems and networks. Different configurations and locations of programs and data are contemplated for use with techniques of described herein. In addition, the server and/or client may be physical or virtual computing systems and may reside on the same physical system. Also, one or more of the modules may themselves be distributed, pooled or otherwise grouped, such as for load balancing, reliability or security reasons. A variety of distributed computing techniques are appropriate for implementing the components of the illustrated embodiments in a distributed manner including but not limited to TCP/IP sockets, RPC, RMI, HTTP, Web Services (XML-RPC, JAX-RPC, SOAP, etc.) and the like. Other variations are possible. Also, other functionality could be provided by each component/module, or existing functionality could be distributed amongst the components/modules in different ways, yet still achieve the functions of a CDCSS.

Furthermore, in some embodiments, some or all of the components of the CDCSS 810 may be implemented or provided in other manners, such as at least partially in firmware and/or hardware, including, but not limited to one or more application-specific integrated circuits (ASICs), standard integrated circuits, controllers executing appropriate instructions, and including microcontrollers and/or embedded controllers, field-programmable gate arrays (FPGAs), complex programmable logic devices (CPLDs), and the like. Some or all of the system components and/or data structures may also be stored as contents (*e.g.,* as executable or other machine-readable software instructions or structured data) on a computer-readable medium (*e.g.,* a hard disk; memory; network; other computer-readable medium; or other portable media article to be read by an appropriate drive or via an appropriate connection, such as a DVD or flash memory device) to enable the computer-readable medium to execute or otherwise use or provide the contents to perform at least some of the described techniques. Some or all of the components and/or data structures may be stored on tangible, non-transitory storage mediums. Some or all of the system components and data structures may also be stored as data signals (e.g., by being encoded as part of a carrier wave or included as part of an analog or digital propagated signal) on a variety of computer-readable transmission mediums, which are then transmitted, including across wireless-based and wired/cable-based mediums, and may take a variety of forms (e.g., as part of a single or multiplexed analog signal, or as multiple discrete digital packets or frames). Such computer program products may also take other forms in other embodiments. Accordingly, embodiments of this disclosure may be practiced with other computer system configurations.

From the foregoing it will be appreciated that, although specific embodiments have been described herein for purposes of illustration, various modifications may be made without deviating from the scope of the present disclosure. For example, the methods and systems for performing file synchronization discussed herein are applicable to other architectures other than a client-server architecture. Also, the methods and systems discussed herein are applicable to differing protocols, communication media (optical, wireless, cable, etc.) and devices (such as wireless handsets, electronic organizers, personal digital assistants, tablets, portable email machines, game machines, pagers, navigation devices such as GPS receivers, etc.).

## Claims

1. A computer-implemented method in a client computing system (201a) for synchronizing content of a file (205) with a distinct and separate server computing system (220) using a local data content index (202a), the method comprising:
when content of the file is modified or created, dividing the file into one or more portions (302);
determining which of the one or more portions (302) of the file (205) correspond to data content deemed to be already present on the server computing system (220) by performing an index lookup into the local data content index (202a) and without querying the server computing system (220) to find out what data content is already present on the server computing system (220), the local data content index (202a) residing on the client computing system (201a) and indexing the data content of a plurality of files (103, 205) of the client computing system (201a);
generating a patch (406) comprising one or more segments that correspond to the determined one or more portions (302) of the file (205), each segment either containing data content or a reference to data content in another file, the segment containing data content when the corresponding portion of the file (205) is determined to correspond to data content not deemed to be already present on the server computing system (220), the segment containing a reference to data content when the corresponding portion of the file (205) is determined to correspond to data content deemed to be already present on the server computing system (220); and
forwarding the generated patch (406) and causing a new file (224b) to be generated on the server computing system (220) from the patch (406) in conjunction with data content already present on the server computing system (220), thereby synchronizing the content of the file (205) without forwarding the entire data content of the file (205) from the client computing system (201a) to the server computing system (220).

2. The method of claim 1 wherein the generated patch (406) contains less total data content than the entire data content of the file (205).

3. The method of claim 1 wherein the determining the one or more portions (302) of the file (205) comprise:
determining one or more chunks of data content of the file (205) using a chunking or fingerprinting algorithm.

4. The method of claim 3, wherein the local data content index indexes hash values of chunks of data content for the plurality of files (103) of the client computing system (201a), and further comprising:
determining a hash value for each of the determined one or more chunks of data content of the file; and
performing the index lookup into the local data content index (202a) by looking up the determined hash value for each of the determined one or more chunks of data content of the file to determine whether the determined chunk of data content of the file refers to data already present in another file (204) on the client computing system (201a).

5. The method of claim 4 wherein determining that the chunk of data content of the file (205) refers to data already present in the another file (204) on the client computing system (201a) is used to deem the data to be already present on the server computing system (220).

6. The method of at least one of claims 1 to 5 wherein each segment of the generated patch (406) that contains a reference to data content also stores a hash value of the data content referred to by the reference, wherein a recipient (220, 201b, 201c) of the patch can compute a hash value of data content retrieved as a result of evaluating the reference to data content and compare the computed hash value against the hash value stored in the segment to verify correctness of the retrieved data content.

7. The method of at least one of claims 1 to 6 wherein the patch (406) comprises a header, followed by one or more segments of either data content or a reference to data content.

8. The method of at least one of claims 1 to 7 wherein at least one segment of the generated patch (406) contains a reference to data content of a file (204) that has been deleted from the client system and/or at least one segment contains a reference to data content from a first file (401) and at least one segment contains a reference to data content from a second file (402) that is distinct and separate from the first file (401).

9. The method of at least one of claims 1 to 8, wherein the forwarding of the generated patch (406) is performed as the patch (406) is generated; and/or wherein each segment of the generated patch (406) is forwarded as that segment is generated; and/or
wherein the method further comprises forwarding a manifest that contains indications of all files referred to by the references for data content contained in the one or more segments of the generated patch (406).

10. A computer-implemented method in a server computing system (220) for synchronizing content of a file, comprising:
receiving a patch (406) from a client computing system (201a) that is separate and distinct from the server computing system (220), the patch (406) generated according to at least one of the methods of claims 1 through 9, the patch comprising one or more segments that correspond to one or more portions of the file (205) to be synchronized, each segment containing data content or a reference to data content in another file;
processing each segment of the received patch (406) to create a new file (224b), until the end of the received patch (406) is detected, wherein:
when the segment contains data content, appending the data content to the new file (224b);
when the segment contains a reference to data content, attempting to locate the referred to data content and, when the referred to data content is located, appending the located data content to the new file (224b); and
otherwise when the referred to data content is not located, requesting a copy of a reference file from the client computing system (201a) that contains the referred to data content, and when the reference file is received, locating the referred to data content in the reference file and appending the data content located in the reference file to the new file (224b).

11. The method of claim 10, further comprising:
storing the received patch (406) in a local cache (222) on the server computing system (220); and
providing the stored patch (406) to another client computing system (201b, 201c) upon receiving a request for the new file (224b); and/or
when a request is received for the new file (224b) after the stored patch has been removed from the local cache (222), providing a copy of the entire data content of the new file (224b).

12. The method of at least one of claims 10 or 11 wherein the received patch (406) is stored for a period of time and when the period expires, the stored patch is removed from the local cache (222); and/or
wherein the period of time for storing the received patch (406) is configurable; and/or
wherein the received patch (406) is expunged from the local cache (222) according to an algorithm; and/or
wherein the algorithm for expunging the received patch (406) is at least one of least frequently used, least recently used, or first-in-first-out;

13. The method of at least one of claims 10 to 12, further comprising:
receiving a request from another client computing system (201b, 201c) for the new file (224b); and
providing the received patch (406) to the another client computing system (201b) instead of the entire data content of the new file (224b).

14. The method of at least one of claims 10 to 13, further comprising:
receiving a manifest that contains indications to all locations referred to by any references to data content contained in the received patch (406); and/or
processing the received manifest to determine whether the indicated locations are indeed available before processing each segment of the received patch (406).

15. A computer-readable storage medium containing instructions which, when executed by a computer, cause the computer to carry out the method according to any of claims 1 to 14.

## Patentansprüche

1. Computerimplementiertes Verfahren in einem Clientdatenverarbeitungssystem (201a) zum Synchronisieren des Inhalts einer Datei (205) mit einem eindeutigen und separaten Serverdatenverarbeitungssystem (220) unter Verwendung eines lokalen Dateninhaltsindex (202a), wobei das Verfahren Folgendes umfasst:
wenn der Inhalt der Datei modifiziert oder erstellt wird, Teilen der Datei in einen oder mehrere Abschnitte (302);
Bestimmen, welche des einen oder der mehreren Abschnitte (302) der Datei (205) einem Dateninhalt entsprechen, von dem angenommen wird, dass er im Serverdatenverarbeitungssystem (220) bereits vorhanden ist, durch Durchführen einer Indexnachschlagung im lokalen Dateninhaltsindex (202a) und ohne Abfragen des Serverdatenverarbeitungssystems (220), um herauszufinden, welcher Dateninhalt im Serverdatenverarbeitungssystem (220) bereits vorhanden ist, wobei der lokale Dateninhaltsindex (202a) sich im Clientdatenverarbeitungssystem (201a) befindet und den Dateninhalt einer Vielzahl von Dateien (103, 205) des Clientdatenverarbeitungssystems (201a) indexiert;
Erzeugen eines Patch (406), der ein oder mehrere Segmente umfasst, die dem bestimmten einen oder den bestimmten mehreren Abschnitten (302) der Datei (205) entsprechen, wobei jedes Segment entweder einen Dateninhalt oder einen Verweis auf einen Dateninhalt in einer anderen Datei enthält, wobei das Segment einen Dateninhalt enthält, wenn bestimmt wird, dass der entsprechende Abschnitt der Datei (205) einem Dateninhalt entspricht, von dem nicht angenommen wird, dass er im Serverdatenverarbeitungssystem (220) bereits vorhanden ist, wobei das Segment einen Verweis auf einen Dateninhalt enthält, wenn bestimmt wird, dass der entsprechende Abschnitt der Datei (205) einem Dateninhalt entspricht, von dem angenommen wird, dass er im Serverdatenverarbeitungssystem (220) bereits vorhanden ist; und
Weiterleiten des erzeugten Patch (406) und Bewirken, dass in Verbindung mit einem Dateninhalt, der im Serverdatenverarbeitungssystem (220) bereits vorhanden ist, aus dem Patch (406) eine neue Datei (224b) im Serverdatenverarbeitungssystem (220) erzeugt wird, dadurch Synchronisieren des Inhalts der Datei (205) ohne Weiterleiten des vollständigen Dateninhalts der Datei (205) vom Clientdatenverarbeitungssystem (201a) zum Serverdatenverarbeitungssystem (220).

2. Verfahren nach Anspruch 1, wobei der erzeugte Patch (406) weniger Gesamtdateninhalt enthält als der vollständige Dateninhalt der Datei (205).

3. Verfahren nach Anspruch 1, wobei das Bestimmen des einen oder der mehreren Abschnitte (302) der Datei (205) Folgendes umfasst:
Bestimmen von einem oder mehreren Stücken eines Dateninhalts der Datei (205) unter Verwendung eines Stückelungs- oder Fingerabdruckalgorithmus.

4. Verfahren nach Anspruch 3, wobei der lokale Dateninhaltsindex Hashwerte von Stücken des Dateninhalts für die Vielzahl von Dateien (103) des Clientdatenverarbeitungssystems (201a) indexiert, und das ferner Folgendes umfasst:
Bestimmen eines Hashwertes für jedes des bestimmten einen oder der bestimmten mehreren Stücke des Dateninhalts der Datei und
Durchführen der Indexnachschlagung im lokalen Dateninhaltsindex (202a) durch Nachschlagen des bestimmten Hashwertes für jedes des bestimmten einen oder der bestimmten mehreren Stücke des Dateninhalts der Datei, um zu bestimmen, ob das bestimmte Stück des Dateninhalts der Datei auf Daten verweist, die in einer anderen Datei (204) im Clientdatenverarbeitungssystem (201a) bereits vorhanden sind.

5. Verfahren nach Anspruch 4, wobei das Bestimmen, dass das Stück des Dateninhalts der Datei (205) auf Daten verweist, die in einer anderen Datei (204) im Clientdatenverarbeitungssystem (201a) bereits vorhanden sind, verwendet wird, um anzunehmen, dass die Daten im Serverdatenverarbeitungssystem (220) bereits vorhanden sind.

6. Verfahren nach mindestens einem der Ansprüche 1 bis 5, wobei in jedem Segment des erzeugten Patch (406), der einen Verweis auf einen Dateninhalt enthält, auch ein Hashwert des Dateninhalts gespeichert ist, auf den durch den Verweis verwiesen wird, wobei ein Empfänger (220, 201b, 201c) des Patch einen Hashwert eines Dateninhalts, der als Resultat des Bewertens des Verweises auf den Dateninhalt abgerufen wird, berechnen und den berechneten Hashwert mit dem Hashwert, der im Segment gespeichert ist, vergleichen kann, um die Korrektheit des abgerufenen Dateninhalts zu verifizieren.

7. Verfahren nach mindestens einem der Ansprüche 1 bis 6, wobei der Patch (406) einen Header, gefolgt von einem oder mehreren Segmenten entweder mit Dateninhalt oder einem Verweis auf Dateninhalt, umfasst.

8. Verfahren nach mindestens einem der Ansprüche 1 bis 7, wobei mindestens ein Segment des erzeugten Patch (406) einen Verweis auf den Dateninhalt einer Datei (204), die vom Clientsystem gelöscht wurde, enthält und/oder mindestens ein Segment einen Verweis auf den Dateninhalt von einer ersten Datei (401) enthält und mindestens ein Segment einen Verweis auf den Dateninhalt von einer zweiten Datei (402), die eindeutig und von der ersten Datei (401) separat ist, enthält.

9. Verfahren nach mindestens einem der Ansprüche 1 bis 8, wobei das Weiterleiten des erzeugten Patch (406) durchgeführt wird, wenn der Patch (406) erzeugt wird; und/oder wobei jedes Segment des erzeugten Patch (406) weitergeleitet wird, wenn das Segment erzeugt wird; und/oder
wobei das Verfahren ferner das Weiterleiten eines Manifests enthält, das Anzeigen von allen Dateien, auf die von den Verweisen auf einen Dateninhalt verwiesen wird, die in dem einen oder den mehreren Segmenten des erzeugten Patch (406) enthalten sind, enthält.

10. Computerimplementiertes Verfahren in einem Serverdatenverarbeitungssystem (220) zum Synchronisieren von Inhalt einer Datei, das Folgendes umfasst:
Empfangen eines Patch (406) von einem Clientdatenverarbeitungssystem (201a), das eindeutig und vom Serverdatenverarbeitungssystem (220) separat ist, wobei der Patch (406) gemäß mindestens einem Verfahren der Ansprüche 1 bis 9 erzeugt wird, wobei der Patch ein oder mehrere Segmente umfasst, die einem oder mehreren Abschnitten der zu synchronisierenden Datei (205) entsprechen, wobei jedes Segment einen Dateninhalt oder einen Verweis auf einen Dateninhalt in einer anderen Datei enthält;
Verarbeiten jedes Segments des empfangenen Patch (406), um eine neue Datei (224b) zu erstellen, bis das Ende des empfangenen Patch (406) detektiert wird, wobei:
wenn das Segment einen Dateninhalt enthält, Anhängen des Dateninhalts an die neue Datei (224b);
wenn das Segment einen Verweis auf einen Dateninhalt enthält, Versuchen, den Dateninhalt, auf den verwiesen wird, zu lokalisieren, und, wenn der Dateninhalt, auf den verwiesen wird, lokalisiert wird, Anhängen des lokalisierten Dateninhalts an die neue Datei (224b) und andernfalls, wenn der Dateninhalt, auf den verwiesen wird, nicht lokalisiert wird, Anfordern einer Kopie einer Verweisdatei beim Clientdatenverarbeitungssystem (201a), die den Dateninhalt enthält, auf den verwiesen wird, und wenn die Verweisdatei empfangen wird, Lokalisieren des Dateninhalts, auf den verwiesen wird, in der Verweisdatei und Anhängen des in der Verweisdatei lokalisierten Dateninhalts an die neue Datei (224b).

11. Verfahren nach Anspruch 10, das ferner Folgendes umfasst:
Speichern des empfangenen Patch (406) in einem lokalen Cache (222) im Serverdatenverarbeitungssystem (220) und Bereitstellen des gespeicherten Patch (406) für ein anderes Clientdatenverarbeitungssystem (201b, 201c) nach Empfangen einer Anforderung der neuen Datei (224b) und/oder
wenn eine Anforderung der neuen Datei (224b) empfangen wird, nachdem der gespeicherte Patch aus dem lokalen Cache (222) entfernt wurde, Bereitstellen einer Kopie des vollständigen Dateninhalts der neuen Datei (224b).

12. Verfahren nach mindestens einem der Ansprüche 10 oder 11, wobei der empfangene Patch (406) für eine Zeitperiode gespeichert wird und, wenn die Periode abläuft, der gespeicherte Patch aus dem lokalen Cache (222) entfernt wird und/oder
wobei die Zeitperiode zum Speichern des empfangenen Patch (406) auslegbar ist und/oder
wobei der empfangene Patch (406) gemäß einem Algorithmus aus dem lokalen Cache (222) beseitigt wird und/oder
wobei der Algorithmus zum Beseitigen des empfangenen Patch (406) mindestens eines von am wenigsten verwendet, am längsten nicht verwendet, oder First-in-First-out ist.

13. Verfahren nach mindestens einem der Ansprüche 10 bis 12, das ferner Folgendes umfasst:
Empfangen einer Anforderung der neuen Datei (224b) von einem anderen Clientdatenverarbeitungssystem (201b, 201c) und
Bereitstellen des empfangenen Patch (406) anstelle des vollständigen Dateninhalts der neuen Datei (224b) für ein anderes Clientdatenverarbeitungssystem (201b).

14. Verfahren nach mindestens einem der Ansprüche 10 bis 13, das ferner Folgendes umfasst:
Empfangen eines Manifests, das Anzeigen für alle Standorte enthält, auf die von allen Verweisen auf einen Dateninhalt, die im empfangenen Patch (406) enthalten sind, verwiesen wird; und/oder
Verarbeiten des empfangenen Manifests, um zu bestimmen, ob die angezeigten Standorte tatsächlich verfügbar sind, bevor jedes Segment des empfangenen Patch (406) verarbeitet wird.

15. Computerlesbares Speichermedium, das Anweisungen enthält, die, wenn sie von einem Computer ausgeführt werden, den Computer veranlassen, das Verfahren nach einem der Ansprüche 1 bis 14 umzusetzen.

## Revendications

1. Procédé mis en œuvre par ordinateur dans un système informatique client (201a) permettant de synchroniser le contenu d'un fichier (205) avec un système informatique serveur séparé (220) utilisant un index de contenu de données local (202a), le procédé comprenant les étapes suivantes :
lorsque le contenu du fichier est modifié ou créé, diviser le fichier en une ou plusieurs parties (302) ;
déterminer laquelle des une ou plusieurs parties (302) du fichier (205) correspond au contenu de données présumé être déjà présent sur le système informatique serveur (220) en exécutant une consultation d'index dans l'index de contenu de données local (202a) et sans demander au système informatique serveur (220) de trouver quel contenu de données est déjà présent sur le système informatique serveur (220), l'index de contenu de données local (202a) résidant sur le système informatique client (201a) et indexant le contenu de données d'une pluralité de fichiers (103, 205) du système informatique client (201a) ;
générer un correctif (406) comportant un ou plusieurs segments qui correspondent aux une ou plusieurs parties (302) déterminées du fichier (205), chaque segment contenant un contenu de données ou une référence à un contenu de données dans un autre fichier, le segment contenant un contenu de données lorsque la partie correspondante du fichier (205) est déterminée correspondre à un contenu de données non présumé être déjà présent sur le système informatique serveur (220), le segment contenant une référence à un contenu de données lorsque la partie correspondante du fichier (205) est déterminée correspondre à un contenu de données présumé être déjà présent sur le système informatique serveur (220) ; et
transmettre le correctif généré (406) et causer la génération d'un nouveau fichier (224b) sur le système informatique serveur (220) à partir du correctif (406) conjointement avec un contenu de données déjà présent sur le système informatique serveur (220), synchronisant ainsi le contenu du fichier (205) sans transmettre le contenu de données entier du fichier (205) à partir du système informatique client (201a) au système informatique serveur (220).

2. Procédé selon la revendication 1, dans lequel le correctif généré (406) contient un contenu de données total moindre que le contenu de données entier du fichier (205).

3. Procédé selon la revendication 1, dans lequel l'étape de détermination des une ou plusieurs parties (302) du fichier (205) comprend :
déterminer un ou plusieurs fragments de contenu de données du fichier (205) en utilisant un algorithme de fragmentation ou de pistage par empreinte numérique unique.

4. Procédé selon la revendication 3, dans lequel l'index de contenu de données local indexe des valeurs de hachage de fragments de contenu de données pour la pluralité de fichiers (103) du système informatique client (201a), et comprenant en outre :
déterminer une valeur de hachage pour chacun des un ou plusieurs fragments déterminés de contenu de données du fichier ; et
exécuter la consultation d'index dans l'index de contenu de données local (202a) en consultant la valeur de hachage déterminée pour chacun des un ou plusieurs fragments déterminés de contenu de données du fichier pour déterminer si le fragment déterminé de contenu de données du fichier réfère à des données déjà présentes dans un autre fichier (204) sur le système informatique client (201a).

5. Procédé selon la revendication 4, dans lequel l'étape de détermination que le fragment de contenu de données du fichier (205) réfère à des données déjà présentes dans le un autre fichier (204) sur le système informatique client (201a) est utilisée pour présumer que les données sont déjà présentes sur le système informatique serveur (220).

6. Procédé selon au moins une des revendications 1 à 5, dans lequel chaque segment du correctif généré (406) qui contient une référence à un contenu de données stocke également une valeur de hachage du contenu de données référé par la référence, un destinataire (220, 201b, 201c) du correctif pouvant calculer une valeur de hachage d'un contenu de données récupéré comme un résultat de l'évaluation de la référence à un contenu de données et comparer la valeur de hachage calculée avec la valeur de hachage stockée dans le segment pour vérifier la justesse du contenu de données récupéré.

7. Procédé selon au moins une des revendications 1 à 6, dans lequel le correctif (406) comprend un en-tête, suivi par un ou plusieurs segments d'un contenu de données ou d'une référence à un contenu de données.

8. Procédé selon au moins une des revendications 1 à 7, dans lequel au moins un segment du correctif généré (406) contient une référence à un contenu de données d'un fichier (204) qui a été supprimé du système client et/ou au moins un segment contient une référence à un contenu de données d'un premier fichier (401) et au moins un segment contient une référence à un contenu de données d'un deuxième fichier (402) qui est distinct et séparé du premier fichier (401).

9. Procédé selon au moins une des revendications 1 à 8, dans lequel l'étape de transmission du correctif généré (406) est exécutée lorsque le correctif (406) est généré ; et/ou chaque segment du correctif généré (406) étant transmis lorsque ce segment est généré ; et/ou
le procédé comprenant en outre transmettre un manifeste qui contient des indications de tous les fichiers référés par les références au contenu de données contenu dans les un ou plusieurs segments du correctif généré (406).

10. Procédé mis en œuvre par ordinateur dans un système informatique serveur (220) permettant de synchroniser le contenu d'un fichier, comprenant :
recevoir un correctif (406) à partir d'un système informatique client (201a) qui est séparé et distinct du système informatique serveur (220), le correctif (406) étant généré selon au moins un des procédés des revendications 1 à 9, le correctif comportant un ou plusieurs segments qui correspondent à une ou plusieurs parties du fichier (205) devant être synchronisé, chaque segment contenant un contenu de données ou une référence à un contenu de données dans un autre fichier ;
traiter chaque segment du correctif reçu (406) pour créer un nouveau fichier (224b), jusqu'à ce que la fin du correctif reçu (406) soit détectée :
lorsque le segment contient un contenu de données, ajouter le contenu de données au nouveau fichier (224b) ;
lorsque le segment contient une référence à un contenu de données, tenter de localiser le contenu de données référé et, lorsque le contenu de données référé est localisé, ajouter le contenu de données localisé au nouveau fichier (224b) ; et
dans le cas contraire, lorsque le contenu de données référé n'est pas localisé, demander une copie d'un fichier de référence du système informatique client (201a) qui contient le contenu de données référé, et lorsque le fichier de référence est reçu, localiser le contenu de fichier référé dans le fichier de référence et ajouter le contenu de données localisé dans le fichier de référence au nouveau fichier (224b).

11. Procédé selon la revendication 10, comprenant en outre :
stocker le correctif reçu (406) dans une mémoire cache locale (222) sur le système informatique serveur (220) ; et
fournir le correctif stocké (406) à un autre système informatique client (201b, 201c) lors de la réception d'une requête pour le nouveau fichier (224b) ; et/ou
lorsqu'une requête est reçue pour le nouveau fichier (224b) après que le correctif stocké a été supprimé de la mémoire cache locale (222), fournir une copie du contenu de données entier du nouveau fichier (224b) .

12. Procédé selon au moins une des revendications 10 ou 11, dans lequel le correctif reçu (406) est stocké pendant une période de temps et lorsque la période expire, le correctif stocké est supprimé de la mémoire cache locale (222) ; et/ou
la période de temps pour stocker le correctif reçu (406) étant configurable ; et/ou
le correctif reçu (406) étant supprimé de la mémoire cache locale (222) selon un algorithme ; et/ou
l'algorithme de suppression du correctif reçu (406) est au moins un algorithme parmi un algorithme moins fréquemment utilisé, moins utilisé récemment ou premier entré premier sorti.

13. Procédé selon au moins une des revendications 10 à 12, comprenant en outre :
recevoir une requête émise à partir d'un autre système informatique client (201b, 201c) pour le nouveau fichier (224b) ; et
fournir le correctif reçu (406) au un autre système informatique client (201b) à la place du contenu de données entier du nouveau fichier (224b).

14. Procédé selon au moins une des revendications 10 à 13, comprenant en outre :
recevoir un manifeste qui contient des indications de tous les emplacements référés par des références à un contenu de données contenu dans le correctif reçu (406) ; et/ou
traiter le manifeste reçu pour déterminer si les emplacements indiqués sont disponibles avant de traiter chaque segment du correctif reçu (406).

15. Support de stockage lisible par ordinateur contenant des instructions qui, lorsqu'elles sont exécutées par un ordinateur, amènent l'ordinateur à mettre en œuvre le procédé selon une des revendications 1 à 14.
